# EUROPEAN PATENT APPLICATION

(11) **EP 4 485 269 A1**
(43) Date of publication of application: **01.01.2025**
(21) Application number: 24181945.7
(22) Date of filing: 13.06.2024
(51) Int. Cl.: G06F 30/31, G06F 30/398, G06F 111/02, G06F 115/12, G06F 119/18, G06F 113/18

(54) **METHOD FOR PERFORMING AUTOMATIC LAYOUT DEFECT CHECKING CONTROL REGARDING CIRCUIT DESIGN, ASSOCIATED APPARATUS AND ASSOCIATED COMPUTER-READABLE MEDIUM**

(30) Priority: 30.06.2023 US 202363511196 P; 10.06.2024 US 202418739311
(71) Applicant: MediaTek Inc., Hsin-Chu 300 (TW)
(72) Inventor: CHANG, Shu-Huan, 30078 Hsinchu City (TW); CHEN, Yi-Hung, 30078 Hsinchu City (TW); HSU, Chih-Jung, 30078 Hsinchu City (TW); LIEN, Chen, 30078 Hsinchu City (TW); FANG, Guan-Qi, 30078 Hsinchu City (TW); TU, Deng-Yao, 30078 Hsinchu City (TW); CHEN, Po-Yang, 30078 Hsinchu City (TW)
(74) Representative: Hoefer & Partner Patentanwälte mbB

(57) **Abstract**

A method for performing automatic layout defect checking, ALDC, control regarding circuit design, associated apparatus and an associated computer-readable medium are provided. The method applicable to a processing circuit may include: providing a web-based entry in an ALDC control system running on a processing circuit, for any user among multiple users to upload at least a layout file of a package substrate design of at least one package substrate to the ALDC control system, in order to obtain at least the layout file from a client electronic device through the web-based entry (S11); utilizing at least one backend program module to check the layout file according to a plurality of predetermined layout defect checking rules to generate at least one checking result, and create a layout defect checking report of the package substrate design (S12); and sending the layout defect checking report corresponding to the layout file to the client electronic device (S13).

## Description

### Cross Reference to Related Applications

This application claims the benefit of U.S. Provisional Application No. 63/511,196, filed on June 30th, 2023. The content of the application is incorporated herein by reference.

### Background

The present invention is related to circuit layout, and more particularly, to a method for performing automatic layout defect checking (ALDC) control regarding circuit design, an associated apparatus and an associated computer-readable medium.

According to the related art, a package substrate design may contain multiple components/patterns, such as signal traces, vias, degassing holes, ball grid arrays (BGAs), etc., and there may be various defective layout patterns which may cause signal integrity (SI) or power integrity (PI) problems to the design. More particularly, the components/patterns count of the multiple components/patterns may be very great, for example, the package substrate design may contain thousands of components/patterns. As a result, it may be very hard to find all defective layout patterns, and the associated costs such as the labor costs may be significantly increased for finding and checking the defective layout patterns with huge human efforts. Thus, a novel method and associated architecture are needed for solving the problems without introducing any side effect or in a way that is less likely to introduce a side effect.

### Summary

It is an objective of the present invention to provide a method for performing ALDC control regarding circuit design, an associated apparatus and an associated computer-readable medium, in order to solve the above-mentioned problems.

Methods, apparatuses and a computer-readable medium according to the invention are defined in the independent claims. The dependent claims define preferred embodiments thereof. At least one embodiment of the present invention provides a method for performing ALDC control regarding circuit design, where the method can be applied to a processing circuit within a main electronic device. For example, the method may comprise: providing a web-based entry in an ALDC control system running on the processing circuit, for any user among multiple users to upload at least a layout file of a package substrate design of at least one package substrate to the ALDC control system, in order to obtain at least the layout file from a client electronic device through the web-based entry; utilizing at least one backend program module in the ALDC control system to check the layout file according to a plurality of predetermined layout defect checking rules to generate at least one checking result, and create a layout defect checking report of the package substrate design, for being downloaded by the any user, wherein the layout defect checking report carries the at least one checking result, for indicating whether any layout defect among a plurality of predetermined layout defects has occurred in the layout file; and sending the layout defect checking report corresponding to the layout file to the client electronic device for making the client electronic device indicate at least one defect position of at least one layout defect of the package substrate design with a display device of the client electronic device.

At least one embodiment of the present invention provides an apparatus that operates according to the above method, where the apparatus may comprise at least the processing circuit within the main electronic device. Preferably, the apparatus may comprise the whole of the main electronic device.

At least one embodiment of the present invention provides a computer-readable medium related to the above method, where the computer-readable medium may store a program code which causes the processing circuit to operate according to the method when executed by the processing circuit.

At least one embodiment of the present invention provides a method for performing ALDC control regarding circuit design, where the method can be applied to a processing circuit within a client electronic device. For example, the method may comprise: accessing a web-based entry in an ALDC control system running on a main electronic device, for any user among multiple users to upload at least a layout file of a package substrate design of at least one package substrate to the ALDC control system, in order to send at least the layout file from the client electronic device to the main electronic device through the web-based entry, wherein at least one backend program module in the ALDC control system is arranged to check the layout file according to a plurality of predetermined layout defect checking rules to generate at least one checking result, and create a layout defect checking report of the package substrate design, for being downloaded by the any user, wherein the layout defect checking report carries the at least one checking result, for indicating whether any layout defect among a plurality of predetermined layout defects has occurred in the layout file; and obtaining the layout defect checking report corresponding to the layout file from the main electronic device for making the client electronic device indicate at least one defect position of at least one layout defect of the package substrate design with a display device of the client electronic device.

At least one embodiment of the present invention provides an apparatus that operates according to the above method, where the apparatus may comprise at least the processing circuit within the client electronic device. Preferably, the apparatus may comprise the whole of the client electronic device.

At least one embodiment of the present invention provides a computer-readable medium related to the above method, where the computer-readable medium may store a program code which causes the processing circuit to operate according to the method when executed by the processing circuit.

It is an advantage of the present invention that, the present invention method, as well as the associated apparatus such as the processing circuit and the main electronic device, can automatically perform layout defect checking operations with an automatic framework to find and check various defective layout patterns which may cause SI/PI problems to the design, such as a degassing hole above a signal trace, a degassing hole above an anti-pad region, a lack amount of stitching vias along a signal trace, an irregular die area pattern, etc., and therefore can reduce the associated costs such as the labor costs. For example, the automatic framework may comprise the web-based entry for the multiple users to upload their layout files and their design rule options, and comprise the aforementioned at least one backend program module such as backend programs for being invoked to check the layout defects, in order to create the layout defect checking report such as a text format report for one or more users to download. The automatic framework may further comprise an easy plug-in utility on any layout tool at the client electronic device, for helping the user to read the layout defect checking report and locate to the defect positions. As a result, the present invention method and the associated apparatus can save the human resource, reduce the project quality assurance (QA) iteration time and improve the design quality and robustness. In addition, the present invention method and apparatus can solve the related art problems without introducing any side effect or in a way that is less likely to introduce a side effect.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating an automatic framework operating based on a method for performing ALDC control regarding circuit design according to an embodiment of the present invention.
FIG. 2 illustrates some checking results in a first checking control scheme of the method according to a first embodiment of the present invention.
FIG. 3 illustrates some checking results in a second checking control scheme of the method according to a second embodiment of the present invention.
FIG. 4 illustrates some checking results in a third checking control scheme of the method according to a third embodiment of the present invention.
FIG. 5 illustrates some other checking results in the third checking control scheme of the method according to the third embodiment.
FIG. 6 illustrates a checking result in a fourth checking control scheme of the method according to a fourth embodiment of the present invention.
FIG. 7 illustrates another checking result in the fourth checking control scheme of the method according to the fourth embodiment.
FIG. 8 illustrates some checking results in a fifth checking control scheme of the method according to a fifth embodiment of the present invention.
FIG. 9 illustrates another checking result in the fifth checking control scheme of the method according to the fifth embodiment.
FIG. 10 is a flowchart of the method regarding a main side of the automatic framework shown in FIG. 1 according to an embodiment of the present invention.
FIG. 11 is a flowchart of the method regarding a client side of the automatic framework shown in FIG. 1 according to an embodiment of the present invention.
FIG. 12 illustrates a user interface of the web-based entry in the ALDC control system shown in FIG. 1 according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

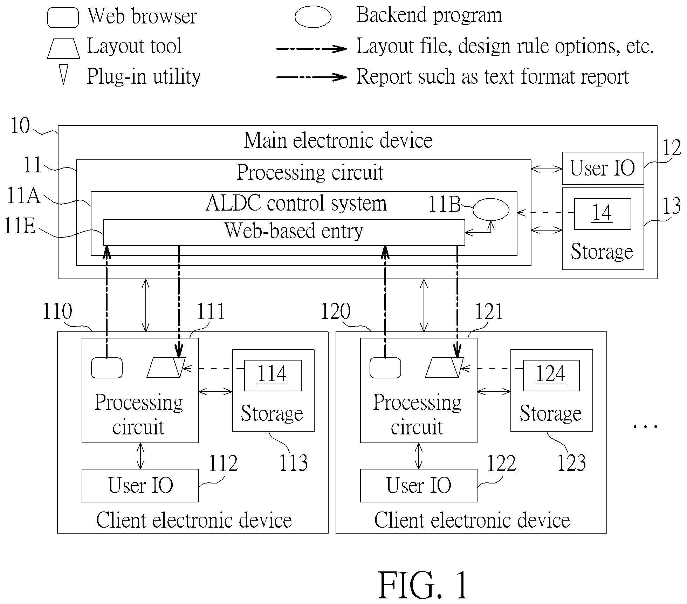

FIG. 1 is a diagram illustrating an automatic framework operating based on a method for performing ALDC control regarding circuit design according to an embodiment of the present invention, where the automatic framework may comprise an ALDC control system 11A and at least one plug-in utility corresponding to the ALDC control system 11A, and the ALDC control system 11A may comprise a set of main program modules such as a web-based entry 11E and at least one backend program module (e.g., one or more backend program modules), which may be collectively referred to as the backend program module 11B. For better comprehension, the automatic framework may be implemented by way of multiple program modules running on multiple electronic devices, and the multiple electronic devices may comprise a main electronic device 10 and multiple client electronic devices such as the client electronic devices 110, 120, etc. As shown in FIG. 1, the main electronic device 10 may comprise a processing circuit 11, at least one user input/output (I/O) device such as the user IO device 12 (labeled "User IO" for brevity) and at least one storage device such as the storage device 13 (labeled "Storage" for brevity). In addition, the client electronic device 110 may comprise a processing circuit 111, at least one user I/O device such as the user IO device 112 (labeled "User IO" for brevity) and at least one storage device such as the storage device 113 (labeled "Storage" for brevity), the client electronic device 120 may comprise a processing circuit 121, at least one user I/O device such as the user IO device 122 (labeled "User IO" for brevity) and at least one storage device such as the storage device 123 (labeled "Storage" for brevity), and the rest can be deduced by analogy.

The ALDC control system 11A comprising the set of main program modules (e.g., the web-based entry 11E and the backend program module 11B) may run on the processing circuit 11 to control operations of the main electronic device 10. For example, a computer-readable medium related to the method, such as the storage device 13, may be arranged to store a program code 14 which causes the processing circuit 11 to operate according to the method when executed by the processing circuit 11, and the program code 14 may be loaded onto the processing circuit 11 to be (or become) the ALDC control system 11A running on the processing circuit 11. In addition, a first set of client program modules such as a first web browser, a first layout tool and a first plug-in utility corresponding to the ALDC control system 11A (e.g., the first plug-in utility installed on the first layout tool) may run on the processing circuit 111 to control operations of the client electronic device 110. For example, a computer-readable medium related to the method, such as the storage device 113, may be arranged to store a program code 114 which causes the processing circuit 111 to operate according to the method when executed by the processing circuit 111, and the program code 114 may be loaded onto the processing circuit 111 to be (or become) the first set of client program modules (e.g., the first web browser, the first layout tool and the first plug-in utility) running on the processing circuit 111. Similarly, a second set of client program modules such as a second web browser, a second layout tool and a second plug-in utility corresponding to the ALDC control system 11A (e.g., the second plug-in utility installed on the second layout tool) may run on the processing circuit 121 to control operations of the client electronic device 120. For example, a computer-readable medium related to the method, such as the storage device 123, may be arranged to store a program code 124 which causes the processing circuit 121 to operate according to the method when executed by the processing circuit 121, and the program code 124 may be loaded onto the processing circuit 121 to be (or become) the second set of client program modules (e.g., the second web browser, the second layout tool and the second plug-in utility) running on the processing circuit 121. Regarding the other client electronic devices among the multiple client electronic devices, the rest can be deduced by analogy.

In the architecture shown in FIG. 1, the web browsers such as the first web browser, the second web browser, etc. running on the multiple client electronic devices may be multiple duplicated versions of the same web browser (or the program product thereof), the layout tools such as the first layout tool, the second layout tool, etc. running on the multiple client electronic devices may be multiple duplicated versions of the same layout tool (or the program product thereof), and the plug-in utilities such as the first plug-in utility, the second plug-in utility, etc. running on the multiple client electronic devices may be multiple duplicated versions of the same plug-in utility (or the program product thereof) corresponding to the ALDC control system 11A, but the present invention is not limited thereto. Preferably, the web browsers, the layout tools and/or the plug-in utilities may vary with respect to the multiple client electronic devices, for example, depending on the respective operating systems (OSs) of the multiple client electronic devices.

Regarding the main side of the automatic framework, the processing circuit 11 within the main electronic device 10 may operate according to the method, and the associated operations may comprise:
(1) the processing circuit 11 may provide the web-based entry 11E in the ALDC control system 11A running on the processing circuit 11, for any user among multiple users to upload at least a layout file of a package substrate design of at least one package substrate (e.g., one or more package substrates) to the ALDC control system 11A, in order to obtain at least the layout file from a client electronic device (e.g., any client electronic device among the multiple client electronic devices) through the web-based entry 11E;
(2) the processing circuit 11 may utilize the aforementioned at least one backend program module such as the backend program module 11B in the ALDC control system 11A to check the layout file according to a plurality of predetermined layout defect checking rules to generate at least one checking result (e.g., one or more checking results), and to create a layout defect checking report of the package substrate design, for being downloaded by the aforementioned any user, where the layout defect checking report may carry the aforementioned at least one checking result, for indicating whether any layout defect among a plurality of predetermined layout defects has occurred in the layout file; and
(3) the processing circuit 11 may send the layout defect checking report corresponding to the layout file to the client electronic device for making the client electronic device indicate at least one defect position (e.g., one or more defect positions) of at least one layout defect (e.g., one or more layout defects) of the package substrate design with a display device of the client electronic device;
where the client electronic device such as any of the client electronic devices 110, 120, etc. may be linked to the main electronic device 10 to allow uploading the layout file by the aforementioned any user. In addition, the layout defect checking report may be a text format report, and more particularly, may be prepared in a predetermined text format with a text file or any other file as long as the implementation of the present invention will not be hindered, allowing the aforementioned any user to read the layout defect checking report from the display device of the client electronic device directly, but the present invention is not limited thereto. For example, the layout defect checking report may be prepared in any other format, rather than being prepared in the predetermined text format. Additionally, if the aforementioned any layout defect has occurred in the layout file, the aforementioned at least one checking result may comprise at least one among the aforementioned at least one layout defect and the aforementioned at least one defect position, such as the aforementioned at least one layout defect and/or the aforementioned at least one defect position; otherwise, the aforementioned at least one checking result may comprise a no-defect indication for indicating that no layout defect has occurred in the layout file. For better comprehension, the no-defect indication may be implemented by way of at least one predetermined text string (e.g., the text string "No layout defect is found" or any other text string), at least one predetermined symbol, a null string, a null value, etc.

Regarding the client side of the automatic framework, the processing circuit within the client electronic device (e.g., the aforementioned any client electronic device among the multiple client electronic devices), such as a corresponding processing circuit among the processing circuits 111, 121, etc., may operate according to the method, and the associated operations may comprise:
(1) the corresponding processing circuit may access the web-based entry 11E in the ALDC control system 11A running on the main electronic device 10 (or on the processing circuit 11 therein), for the aforementioned any user among the multiple users to upload at least the layout file of the package substrate design of the aforementioned at least one package substrate to the ALDC control system 11A, in order to send at least the layout file from the client electronic device to the main electronic device 10 through the web-based entry 11E, where the aforementioned at least one backend program module such as the backend program module 11B in the ALDC control system 11A may be arranged to check the layout file according to the plurality of predetermined layout defect checking rules to generate the aforementioned at least one checking result, and create the layout defect checking report of the package substrate design, for being downloaded by the aforementioned any user; and
(2) the corresponding processing circuit may obtain the layout defect checking report corresponding to the layout file from the main electronic device 10 for making the client electronic device indicate the aforementioned at least one defect position of the aforementioned at least one layout defect of the package substrate design with the display device of the client electronic device;
where the multiple client electronic devices such as the client electronic devices 110, 120, etc. may be linked to the main electronic device 10 to allow uploading multiple layout files by the multiple users, respectively, and the layout file may be one of the multiple layout files. For example, when the aforementioned any layout defect has occurred in the layout file, the aforementioned at least one checking result carried by the layout defect checking report may comprise the aforementioned at least one layout defect and/or the aforementioned at least one defect position, and the corresponding processing circuit may refer to the layout defect checking report for controlling the client electronic device to indicate the aforementioned at least one defect position with the display device. Preferably, the layout defect checking report may be arranged to carry defect position information of the aforementioned at least one defect position.

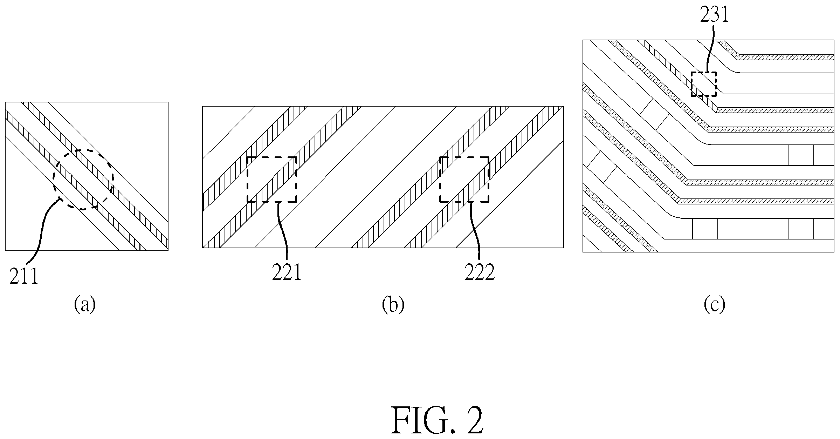

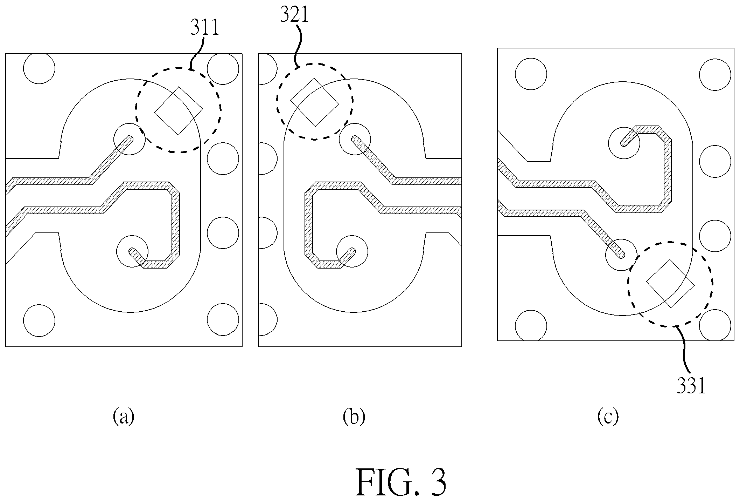

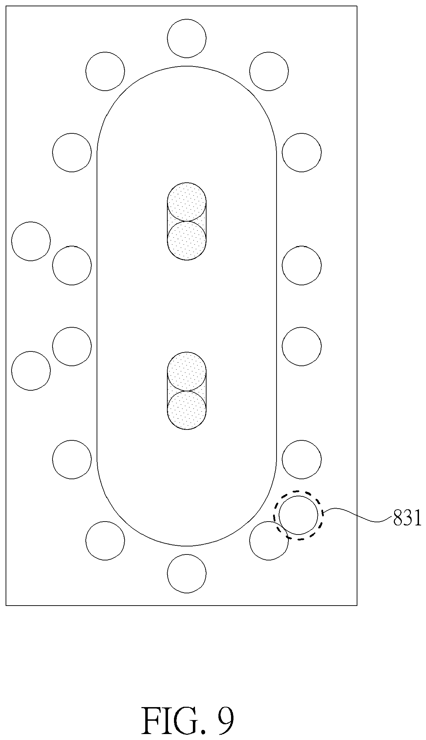

Preferably, the plug-in utility corresponding to the ALDC control system 10A may be installed on the layout tool running on the client electronic device. More particularly, the main electronic device 10 (or the processing circuit 11 therein) may send the layout defect checking report corresponding to the layout file to the client electronic device for making the client electronic device show the aforementioned at least one defect position on a layout view of the layout tool with the aid of the plug-in utility, for the aforementioned any user to read and locate the aforementioned at least one defect position. Under control of the plug-in utility running on the corresponding processing circuit, the client electronic device (or the corresponding processing circuit therein) may obtain the layout defect checking report corresponding to the layout file from the main electronic device 10 to make the client electronic device show the aforementioned at least one defect position on the layout view of the layout tool with the aid of the plug-in utility, for the aforementioned any user to read and locate the aforementioned at least one defect position. The plug-in utility running on the client electronic device (or the corresponding processing circuit therein) may be arranged to parse the layout defect checking report to make the client electronic device show the aforementioned at least one defect position on the layout view of the layout tool, for example, as will be illustrated in the embodiments shown in FIG. 2, FIG. 3, ... and FIG. 9, allowing the user to read and locate the aforementioned at least one defect position from the display device of the client electronic device with ease.

FIG. 2 illustrates some checking results 211, 221, 222 and 231 in a first checking control scheme of the method according to a first embodiment of the present invention, where the checking results 211, 221, 222 and 231 may be found by the ALDC control system 11A and indicated or displayed on the layout view of the layout tool with the aid of the plug-in utility shown in FIG. 1. For example, a first predetermined layout defect checking rule among the plurality of predetermined layout defect checking rules such as the Rules #1, #2, etc. may focus on checking degassing hole(s) above signal trace(s), and more particularly, may comprise that:
**(Rule** #**1**) no degassing hole should be positioned above a signal trace.

In addition, a first checking operation among the operations (e.g., the checking operations {ChkOp(i) | i = 1, 2, ...}) of checking the layout file according to the plurality of predetermined layout defect checking rules may comprise:
**(ChkOp1)** checking the layout file according to the first predetermined layout defect checking rule, for determining whether any degassing hole positioned above any signal trace exists in the package substrate design;
where a first predetermined layout defect among the plurality of predetermined layout defects may represent the aforementioned any degassing hole positioned above the aforementioned any signal trace. For example, a first backend program module among the backend program module 11B running on the processing circuit 11 may perform the first checking operation ChkOp1 to find out the degassing holes which accidentally expose their lower layer signal line(s), and the associated operations may comprise:
   **(ChkOp1(1))** the first backend program module may find all degassing holes on the GND net; and
   **(ChkOp1(2))** the first backend program module may iterate over the degassing holes, in order to check if any lower layer signal line intersects the area of the current hole.

In the sub-diagrams (a), (b) and (c) of FIG. 2, the checking results 211, 221, 222 and 231 may be arranged to indicate some degassing holes above signal traces (illustrated with shading), respectively.

FIG. 3 illustrates some checking results 311, 321 and 331 in a second checking control scheme of the method according to a second embodiment of the present invention, where the checking results 311, 321 and 331 may be found by the ALDC control system 11A and indicated or displayed on the layout view of the layout tool with the aid of the plug-in utility shown in FIG. 1. For example, a second predetermined layout defect checking rule among the plurality of predetermined layout defect checking rules such as the Rules #1, #2, etc. may focus on checking degassing hole(s) above signal anti-pad region(s), and more particularly, may comprise that:
**(Rule #2)** no degassing hole should be positioned above a signal anti-pad region.

In addition, a second checking operation among the operations (e.g., the checking operations {ChkOp(i) | i = 1, 2, ...}) of checking the layout file according to the plurality of predetermined layout defect checking rules may comprise:
**(ChkOp2)** checking the layout file according to the second predetermined layout defect checking rule, for determining whether any degassing hole positioned above any signal anti-pad region exists in the package substrate design;
where a second predetermined layout defect among the plurality of predetermined layout defects may represent the aforementioned any degassing hole positioned above the aforementioned any signal anti-pad region. For example, a second backend program module among the backend program module 11B running on the processing circuit 11 may perform the second checking operation ChkOp2 to find out the degassing holes which are accidentally located at signal anti-pad region(s), and the associated operations may comprise:
   **(ChkOp2(1))** the second backend program module may find all route-keepout/keep-out (or anti-pad) shapes; and
   **(ChkOp2(2))** the second backend program module may iterate over the anti-pads, in order to check if any degassing hole intersects the area of the current anti-pad.

In the sub-diagrams (a), (b) and (c) of FIG. 3, the checking results 311, 321 and 331 may be arranged to indicate some degassing holes (as illustrated with the squares) above signal anti-pad regions, respectively.

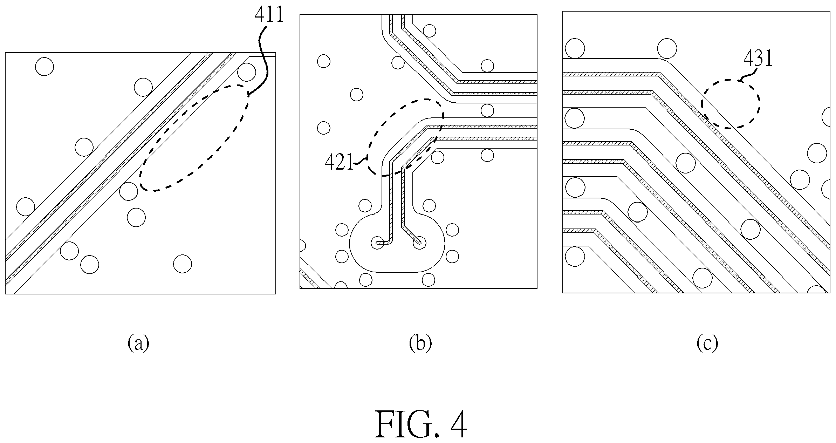

FIG. 4 illustrates some checking results 411, 421 and 431 in a third checking control scheme of the method according to a third embodiment of the present invention, where the checking results 411, 421 and 431 may be found by the ALDC control system 11A and indicated or displayed on the layout view of the layout tool with the aid of the plug-in utility shown in FIG. 1. For example, a third predetermined layout defect checking rule among the plurality of predetermined layout defect checking rules such as the Rules #1, #2, etc. may focus on checking stitching via(s) along differential pair(s), and more particularly, may comprise that:
**(Rule #3)** no arrangement of stitching vias along a differential pair should be an irregular arrangement.

In addition, a third checking operation among the operations (e.g., the checking operations {ChkOp(i) | i = 1, 2, ...}) of checking the layout file according to the plurality of predetermined layout defect checking rules may comprise
**(ChkOp3)** checking the layout file according to the third predetermined layout defect checking rule, for determining whether any irregular arrangement of stitching vias along any differential pair exists in the package substrate design;
where a third predetermined layout defect among the plurality of predetermined layout defects may represent the aforementioned any irregular arrangement of stitching vias along the aforementioned any differential pair. For example, a third backend program module among the backend program module 11B running on the processing circuit 11 may perform the third checking operation ChkOp3 to find out a too long distance for any two neighboring vias and to find out if there are missing stitching vias, and the associated operations may comprise:
   **(ChkOp3(1))** the third backend program module may find all signal line objects of all differential pair nets; and
   **(ChkOp3(2))** for each line segment, the third backend program module may perform the operations of:
      **(ChkOp3(2)_1)** searching its stitching vias from the signal line start point;
      **(ChkOp3(2)_2)** moving to the next searching box according to the slope and/or direction of the current line segment, and recording every found via; and
      **(ChkOp3(2)_3)** if the distance Distance(Current_Via, Previous_Via) between the current via Current_Via and the previous via Previous_Via is greater than a predetermined distance threshold such as a user given threshold User_Given_Threshold, reporting that the distance Distance(Current_Via, Previous_Via) is too long, and/or reporting that one or more vias are missing when no via is found in the user given threshold User_Given_Threshold.

In the sub-diagrams (a), (b) and (c) of FIG. 4, the checking results 411, 421 and 431 may be arranged to indicate the distance Distance(Current_Via, Previous_Via) is too long, and/or to indicate some missing stitching vias along differential pairs (illustrated with shading), respectively.

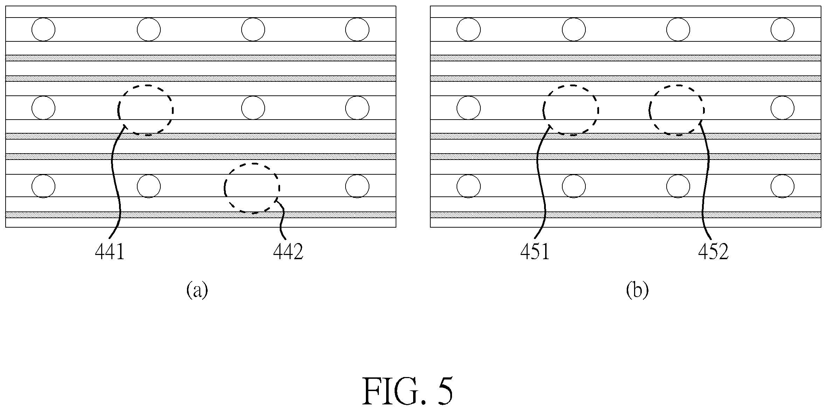

FIG. 5 illustrates some other checking results 441, 442, 451 and 452 in the third checking control scheme of the method according to the third embodiment, where the checking results 441, 442, 451 and 452 may be found by the ALDC control system 11A and indicated or displayed on the layout view of the layout tool with the aid of the plug-in utility shown in FIG. 1. In the sub-diagrams (a) and (b) of FIG. 5, the checking results 441, 442, 451 and 452 may be arranged to indicate the distance Distance(Current_Via, Previous_Via) is too long, and/or to indicate some missing stitching vias along differential pairs (illustrated with shading), respectively.

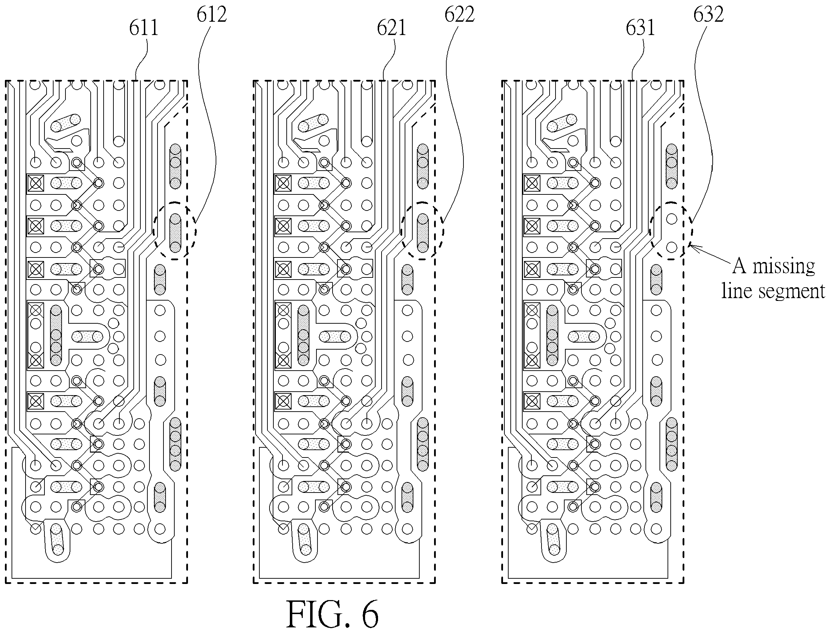

FIG. 6 illustrates a checking result 632 in a fourth checking control scheme of the method according to a fourth embodiment of the present invention, where the checking result 632 may be found by the ALDC control system 11A and indicated or displayed on the layout view of the layout tool with the aid of the plug-in utility shown in FIG. 1. For example, the aforementioned at least one package substrate may comprise multiple package substrates, and a forth predetermined layout defect checking rule among the plurality of predetermined layout defect checking rules such as the Rules #1, #2, etc. may focus on checking irregular die area pattern(s), and more particularly, may comprise that:
**(Rule #4)** no die area pattern among multiple die area patterns respectively corresponding to the multiple package substrates should be an irregular die area pattern.

In addition, a fourth checking operation among the operations (e.g., the checking operations {ChkOp(i) | i = 1, 2, ...}) of checking the layout file according to the plurality of predetermined layout defect checking rules may comprise:
**(ChkOp4)** checking the layout file according to the fourth predetermined layout defect checking rule, for determining whether any irregular die area pattern among the multiple die area patterns exists in the package substrate design;
where a fourth predetermined layout defect among the plurality of predetermined layout defects may represent the aforementioned any irregular die area pattern among the multiple die area patterns. For example, a fourth backend program module among the backend program module 11B running on the processing circuit 11 may perform the fourth checking operation ChkOp4 to check if the die area intellectual properties (IPs) have the same layout style and components, and the associated operations may comprise:
   **(ChkOp4(1))** the fourth backend program module may build up the golden patterns of the user-chosen IP;
   **(ChkOp4(2))** the fourth backend program module may locate to target patterns, and more particularly, compared to a corresponding golden pattern among the golden patterns, check if they are identical at components (or parts) such as vias, pins, signal lines, etc.; and
   **(ChkOp4(3))** the fourth backend program module may put error markers on the associated position(s) when irregular components are found.

As shown in FIG. 6, the layouts 611, 621 and 631 may represent the layouts of some package substrates among the multiple package substrates, where some other layouts therebetween may be omitted for brevity. In an ideal case, the layouts 611, 621 and 631 should be identical to each other. In a real case shown in FIG. 6, the checking results 612 and 622 of corresponding partial layouts of the layouts 611 and 621 may be arranged to indicate that there is no layout defect in the corresponding partial layouts, while the checking result 632 of a corresponding partial layout of the layout 631 may be arranged to indicate a layout defect of the irregular die area pattern in the corresponding partial layout, such as a missing line segment.

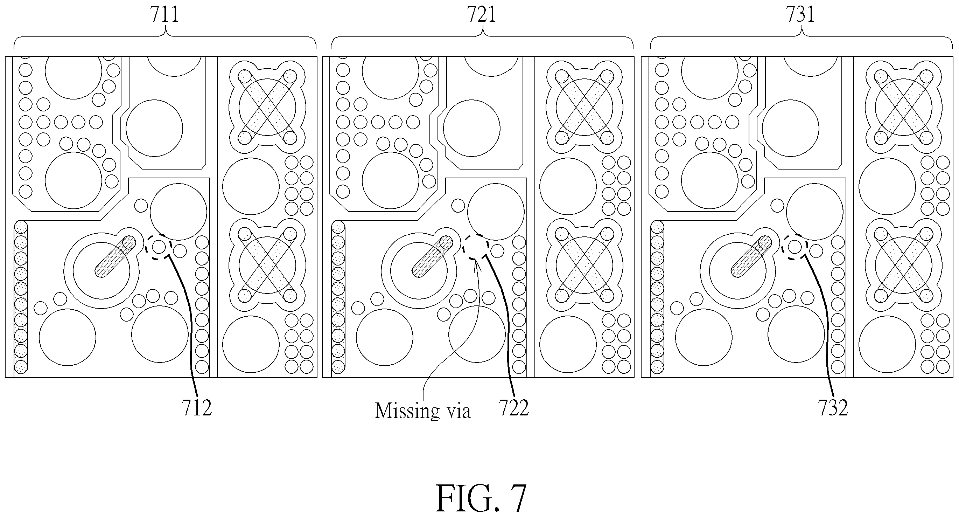

FIG. 7 illustrates another checking result 722 in the fourth checking control scheme of the method according to the fourth embodiment, where the checking result 722 may be found by the ALDC control system 11A and indicated or displayed on the layout view of the layout tool with the aid of the plug-in utility shown in FIG. 1. As shown in FIG. 7, the layouts 711, 721 and 731 may represent the layouts of some package substrates among the multiple package substrates. In an ideal case, the layouts 711, 721 and 731 should be identical to each other. In a real case shown in FIG. 7, the checking results 712 and 732 of corresponding partial layouts of the layouts 711 and 631 may be arranged to indicate that there is no layout defect in the corresponding partial layouts, while the checking result 722 of a corresponding partial layout of the layout 721 may be arranged to indicate a layout defect of the irregular die area pattern in the corresponding partial layout, such as a missing via.

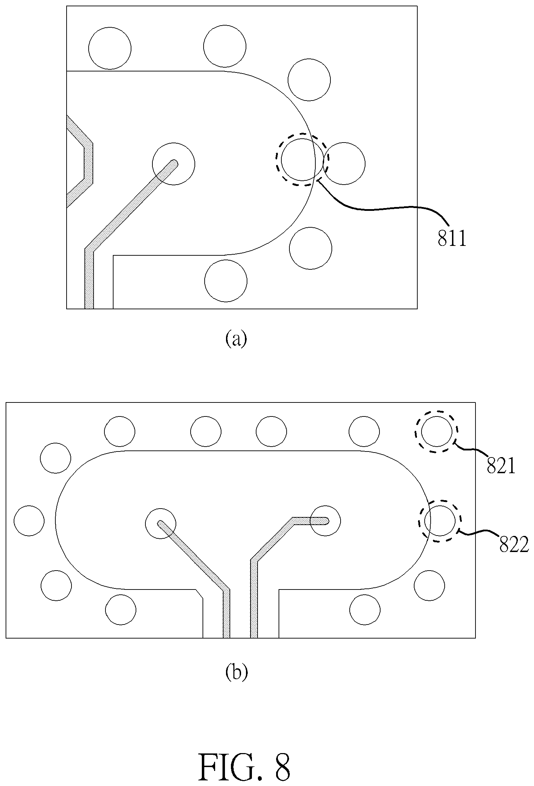

FIG. 8 illustrates some checking results 811, 821 and 822 in a fifth checking control scheme of the method according to a fifth embodiment of the present invention, where the checking results 811, 821 and 822 may be found by the ALDC control system 11A and indicated or displayed on the layout view of the layout tool with the aid of the plug-in utility shown in FIG. 1. For example, a fifth predetermined layout defect checking rule among the plurality of predetermined layout defect checking rules such as the Rules #1, #2, etc. may focus on checking irregular BGA via pattern(s), and more particularly, may comprise that:
**(Rule** #5) no BGA via pattern of surrounding vias at a BGA region should be an irregular BGA via pattern.

In addition, a fifth checking operation among the operations (e.g., the checking operations {ChkOp(i) | i = 1, 2, ...}) of checking the layout file according to the plurality of predetermined layout defect checking rules may comprise:
**(ChkOp5)** checking the layout file according to the fifth predetermined layout defect checking rule, for determining whether any irregular BGA via pattern of surrounding vias at any BGA region exists in the package substrate design;
where a fifth predetermined layout defect among the plurality of predetermined layout defects may represent the aforementioned any irregular BGA via pattern of surrounding vias at the aforementioned any BGA region. For example, a fifth backend program module among the backend program module 11B running on the processing circuit 11 may perform the fifth checking operation ChkOp5 to check a surrounding via among a set of surrounding vias at a BGA region has the same layout style as that of the other surrounding vias among the set of surrounding vias, and the associated operations may comprise:
   **(ChkOp5(1))** the fifth backend program module may build up the golden via patterns of the user-chosen net; and
   **(ChkOp5(2))** the fifth backend program module may locate to target patterns, and more particularly, compared to a corresponding golden pattern among the golden patterns, check if the vias are identical at attributes (or features) such as amount, position, net name, etc.

In the sub-diagrams (a) and (b) of FIG. 8, the checking results 811, 821 and 822 may be arranged to indicate some irregular BGA via patterns (or the irregularly positioned surrounding vias at BGA regions), respectively.

FIG. 9 illustrates another checking result 831 in the fifth checking control scheme of the method according to the fifth embodiment, where the checking result 831 may be found by the ALDC control system 11A and indicated or displayed on the layout view of the layout tool with the aid of the plug-in utility shown in FIG. 1. As shown in FIG. 9, the checking result 831 may be arranged to indicate an irregular BGA via pattern (or the irregularly positioned surrounding via at a BGA region).

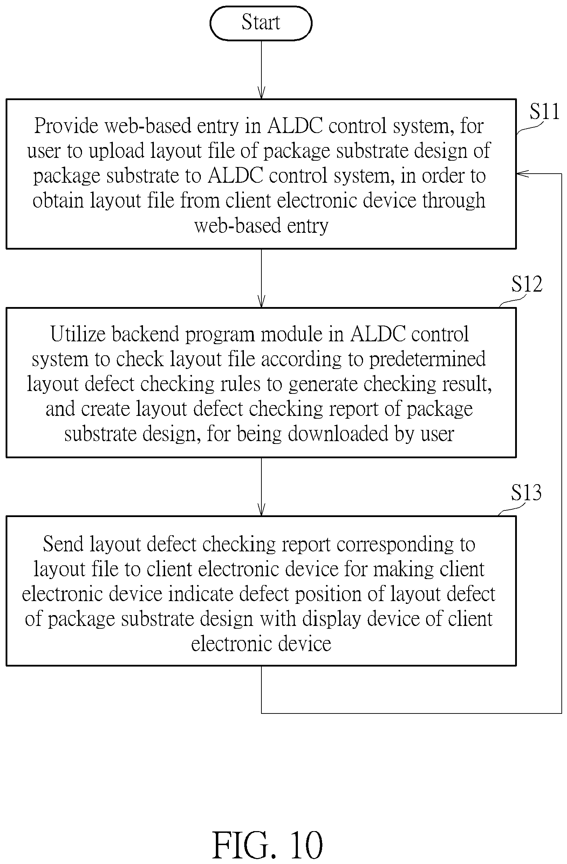

FIG. 10 is a flowchart of the method regarding the main side of the automatic framework shown in FIG. 1 according to an embodiment of the present invention, where the method can be applied to the processing circuit 11 within the main electronic device 10.

In Step S11, the processing circuit 11 may provide the web-based entry 11E in the ALDC control system 11A running on the processing circuit 11, for a user (e.g., the aforementioned any user) among the multiple users to upload at least a layout file of a package substrate design of at least one package substrate (e.g., the one or more package substrates) to the ALDC control system 11A, in order to obtain at least the layout file from a client electronic device (e.g., the aforementioned any client electronic device among the multiple client electronic devices) through the web-based entry 11E.

In Step S12, the processing circuit 11 may utilize the aforementioned at least one backend program module such as the backend program module 11B in the ALDC control system 1 1Ato check the layout file (e.g., the layout file that has just been uploaded in Step S11) according to the plurality of predetermined layout defect checking rules to generate at least one checking result (e.g., the one or more checking results), and to create a layout defect checking report of the package substrate design, such as the layout defect checking report mentioned above, for being downloaded by the user (e.g., the aforementioned any user), where the layout defect checking report may carry the aforementioned at least one checking result, for indicating whether any layout defect among the plurality of predetermined layout defects has occurred in the layout file.

In Step S13, the processing circuit 11 may send the layout defect checking report (e.g., the layout defect checking report that has just been created in Step S12) corresponding to the layout file to the client electronic device for making the client electronic device indicate at least one defect position (e.g., the one or more defect positions) of at least one layout defect (e.g., the one or more layout defects) of the package substrate design with the display device of the client electronic device. For brevity, similar descriptions for this embodiment are not repeated in detail here.

For better comprehension, the method may be illustrated with the working flow shown in FIG. 10, but the present invention is not limited thereto. According to some preferred embodiments, one or more steps may be added, deleted, or changed in the working flow shown in FIG. 10. For example, the package substrate design mentioned in Steps S11, S12 and S13, the user mentioned in Steps S11 and S12 and/or the client electronic device mentioned in Steps S11 and S13 may vary with respect to the iterations of the working flow shown in FIG. 10. For brevity, similar descriptions for these preferred embodiments are not repeated in detail here.

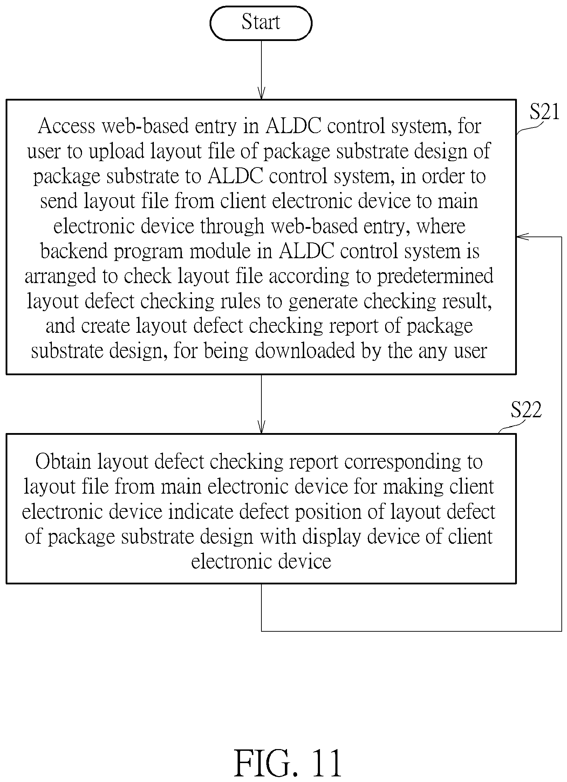

FIG. 11 is a flowchart of the method regarding the client side of the automatic framework shown in FIG. 1 according to an embodiment of the present invention, where the method can be applied to a processing circuit within a client electronic device (e.g., the aforementioned any client electronic device) among the multiple client electronic devices, and more particularly, can be applied to the processing circuit within the client electronic device mentioned in Step S11, such as the corresponding processing circuit mentioned above, and the operations of Step S21 and Step S22 shown in FIG. 11 may correspond to that of Steps S11 and S12 and Step S13 shown in FIG. 10, respectively, but the present invention is not limited thereto.

In Step S21, the processing circuit such as the corresponding processing circuit may access the web-based entry 11E in the ALDC control system 11A running on the main electronic device 10 (or on the processing circuit 11 therein), for the user (e.g., the aforementioned any user) among the multiple users to upload at least the layout file of the package substrate design of the aforementioned at least one package substrate to the ALDC control system 11A, in order to send at least the layout file from the client electronic device to the main electronic device 10 through the web-based entry 11E, where the aforementioned at least one backend program module such as the backend program module 11B in the ALDC control system 11A may be arranged to check the layout file according to the plurality of predetermined layout defect checking rules to generate the aforementioned at least one checking result, and create the layout defect checking report of the package substrate design, for being downloaded by the user.

In Step S22, the processing circuit such as the corresponding processing circuit may obtain the layout defect checking report (e.g., the layout defect checking report mentioned in Step S21) corresponding to the layout file from the main electronic device 10 for making the client electronic device indicate the aforementioned at least one defect position of the aforementioned at least one layout defect of the package substrate design with the display device of the client electronic device. For brevity, similar descriptions for this embodiment are not repeated in detail here.

For better comprehension, the method may be illustrated with the working flow shown in FIG. 11, but the present invention is not limited thereto. According to some preferred embodiments, one or more steps may be added, deleted, or changed in the working flow shown in FIG. 11. For example, the package substrate design mentioned in Steps S21 and S22, the user mentioned in Step S21 and/or the client electronic device mentioned in Steps S21 and S22 may vary with respect to the iterations of the working flow shown in FIG. 11. For brevity, similar descriptions for these preferred embodiments are not repeated in detail here.

Preferably, the main electronic device 10 may be arranged to provide the web-based entry 11E in the ALDC control system 11A running on the processing circuit 10, for the aforementioned any user to upload checking-related information regarding checking the layout file to the ALDC control system 11A, in order to obtain the checking-related information from the client electronic device through the web-based entry 11E. For example, the checking-related information may comprise rule information of the plurality of predetermined layout defect checking rules (e.g., the Rules #1, #2, #3, #4 and #5), allowing the associated persons (e.g., a system manager of the ALDC control system 11A and/or one or more users among the multiple users) to define layout checking targets into the plurality of predetermined layout defect checking rules, where each rule among the plurality of predetermined layout defect checking rules may be implemented as or by way of a Cadence SKILL program among the aforementioned at least one backend program module (or at least one backend program) such as the backend program module 11B, but the present invention is not limited thereto. In some examples, the checking-related information may comprise at least one design rule option regarding the plurality of predetermined layout defect checking rules, for selectively enabling or disabling any predetermined layout defect checking rule among the plurality of predetermined layout defect checking rules. In addition, the aforementioned at least one backend program module (or at least one backend program) such as the backend program module 11B may be running on Cadence Allegro, and the ALDC control system 11A may utilize the tool built-in functions and/or application programming interfaces (APIs) to extract the target layout components such as vias, nets, signal lines, etc. The ALDC control system 11A may be arranged to build up the associated data structures and perform the associated algorithms for the layout components to be checked, in order to write one or more layout defect checking reports (e.g., text reports) corresponding to one or more layout files as output data for being accessed by the multiple client electronic devices such as the client electronic devices 110, 120, etc.

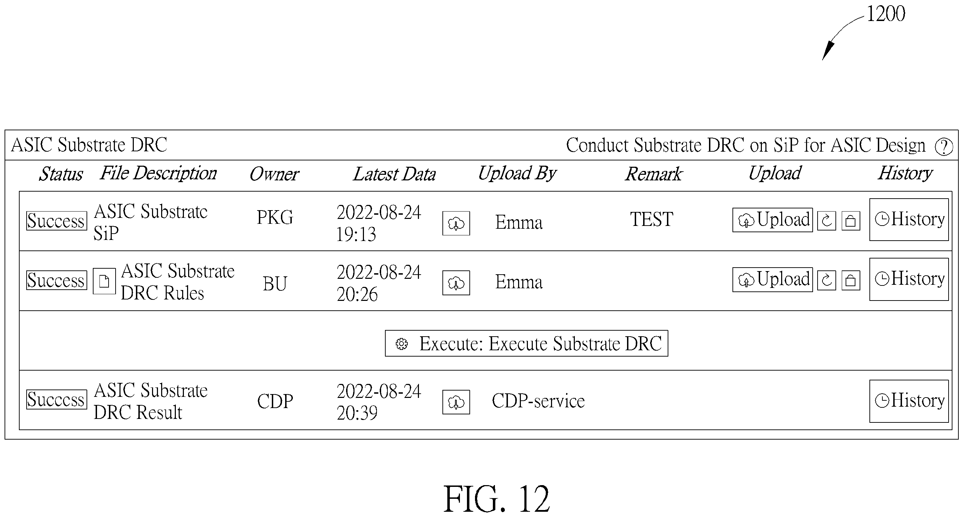

FIG. 12 illustrates a user interface 1200 of the web-based entry 11E in the ALDC control system 11A shown in FIG. 1 according to an embodiment of the present invention. For example, the user interface 1200 may comprise at least one window such as the main window labeled "ASIC Substrate DRC" for performing the ALDC such as application-specific integrated circuit (ASIC) substrate design rule checking (DRC), having a question (or help) icon labeled "?" with the description of "Conduct Substrate DRC on SiP for ASIC Design" on the upper right part of the main window for the user to call a question (or help) window to display the associated information of the ALDC control system 11A for help. As shown in FIG. 12, the user interface 1200 may comprise multiple fields (e.g., the fields of Status, File Description, Owner, Latest Data, Upload By, Remark, Upload and History) in the main window, as well as the associated records such as the records of ASIC Substrate System in Package (SiP), ASIC Substrate DRC Rules, ASIC Substrate DRC Result, etc. In addition, the user interface 1200 may comprise some virtual buttons (e.g., the buttons of "Upload" and "Execute: Execute Substrate DRC") for performing the corresponding functions as indicated by their names. For brevity, similar descriptions for this embodiment are not repeated in detail here.

In the above embodiments, the main electronic device 10 may be implemented by way of a server such as an enterprise-grade computer capable of providing special functions and services to the users over at least one network, and the multiple client electronic devices such as the client electronic devices 110, 120, etc. may be implemented by way of personal computers (PCs) such as desktop computers and laptop computers, where any processing circuit among the processing circuits 11, 111, 121, etc. may be implemented by way of at least one processor/microprocessor, at least one random access memory (RAM), at least one bus, etc., any user IO device among the user IO devices 12, 112, 122, etc. may be implemented by way of a keyboard, a mouse, at least one display device (e.g., liquid-crystal display (LCD) monitor), etc., and any storage device among the storage devices 13, 113, 123, etc. may be implemented by way of at least one hard disk drive (HDD), at least one solid state drive (SSD), etc. For example, the display device mentioned in Steps S13 and S22 may be implemented by way of at least one LCD monitor.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for performing automatic layout defect checking, in the following also referred to as ALDC, control regarding circuit design, the method being applied to a processing circuit within a main electronic device, the method comprising:
providing a web-based entry in an ALDC control system running on the processing circuit, for any user among multiple users to upload at least a layout file of a package substrate design of at least one package substrate to the ALDC control system, in order to obtain at least the layout file from a client electronic device through the web-based entry (S11);
utilizing at least one backend program module in the ALDC control system to check the layout file according to a plurality of predetermined layout defect checking rules to generate at least one checking result, and create a layout defect checking report of the package substrate design, for being downloaded by the any user (S12), wherein the layout defect checking report carries the at least one checking result, for indicating whether any layout defect among a plurality of predetermined layout defects has occurred in the layout file; and
sending the layout defect checking report corresponding to the layout file to the client electronic device for making the client electronic device indicate at least one defect position of at least one layout defect of the package substrate design with a display device of the client electronic device (S13).

2. The method of claim 1, wherein the client electronic device is linked to the main electronic device to allow uploading the layout file by the any user; and/or
wherein multiple client electronic devices are linked to the main electronic device to allow uploading multiple layout files by the multiple users, respectively, and the layout file is one of the multiple layout files.

3. The method of claim 1 or 2, wherein a plug-in utility corresponding to the ALDC control system is installed on a layout tool running on the client electronic device; and the main electronic device is arranged to send the layout defect checking report corresponding to the layout file to the client electronic device for making the client electronic device show the at least one defect position on a layout view of the layout tool with aid of the plug-in utility, for the any user to read and locate the at least one defect position.

4. The method of claim 3, wherein the layout defect checking report is a text format report; and the plug-in utility running on the client electronic device is arranged to parse the layout defect checking report to make the client electronic device show the at least one defect position on the layout view of the layout tool.

5. The method of any one of claims 1 to 4, wherein a first predetermined layout defect checking rule among the plurality of predetermined layout defect checking rules comprises that no degassing hole should be positioned above a signal trace; and a first checking operation among operations of checking the layout file according to the plurality of predetermined layout defect checking rules comprises checking the layout file according to the first predetermined layout defect checking rule, for determining whether any degassing hole positioned above any signal trace exists in the package substrate design, wherein a first predetermined layout defect among the plurality of predetermined layout defects represents the any degassing hole positioned above the any signal trace; and/or
wherein a second predetermined layout defect checking rule among the plurality of predetermined layout defect checking rules comprises that no degassing hole should be positioned above a signal anti-pad region; and a second checking operation among operations of checking the layout file according to the plurality of predetermined layout defect checking rules comprises checking the layout file according to the second predetermined layout defect checking rule, for determining whether any degassing hole positioned above any signal anti-pad region exists in the package substrate design, wherein a second predetermined layout defect among the plurality of predetermined layout defects represents the any degassing hole positioned above the any signal anti-pad region.

6. The method of any one of claims 1 to 5, wherein a third predetermined layout defect checking rule among the plurality of predetermined layout defect checking rules comprises that no arrangement of stitching vias along a differential pair should be an irregular arrangement; and a third checking operation among operations of checking the layout file according to the plurality of predetermined layout defect checking rules comprises checking the layout file according to the third predetermined layout defect checking rule, for determining whether any irregular arrangement of stitching vias along any differential pair exists in the package substrate design, wherein a third predetermined layout defect among the plurality of predetermined layout defects represents the any irregular arrangement of stitching vias along the any differential pair; and/or
wherein the at least one package substrate comprises multiple package substrates; a forth predetermined layout defect checking rule among the plurality of predetermined layout defect checking rules comprises that no die area pattern among multiple die area patterns respectively corresponding to the multiple package substrates should be an irregular die area pattern; and a fourth checking operation among operations of checking the layout file according to the plurality of predetermined layout defect checking rules comprises checking the layout file according to the fourth predetermined layout defect checking rule, for determining whether any irregular die area pattern among the multiple die area patterns exists in the package substrate design, wherein a fourth predetermined layout defect among the plurality of predetermined layout defects represents the any irregular die area pattern among the multiple die area patterns; and/or
wherein a fifth predetermined layout defect checking rule among the plurality of predetermined layout defect checking rules comprises that no ball grid array (BGA) via pattern of surrounding vias at a BGA region should be an irregular BGA via pattern; and a fifth checking operation among operations of checking the layout file according to the plurality of predetermined layout defect checking rules comprises checking the layout file according to the fifth predetermined layout defect checking rule, for determining whether any irregular BGA via pattern of surrounding vias at any BGA region exists in the package substrate design, wherein a fifth predetermined layout defect among the plurality of predetermined layout defects represents the any irregular BGA via pattern of surrounding vias at the any BGA region.

7. The method of any one of claims 1 to 6, wherein the main electronic device is arranged to provide the web-based entry in the ALDC control system running on the processing circuit, for the any user to upload checking-related information regarding checking the layout file to the ALDC control system, in order to obtain the checking-related information from the client electronic device through the web-based entry.

8. The method of claim 7, wherein the checking-related information comprises at least one design rule option regarding the plurality of predetermined layout defect checking rules, for selectively enabling or disabling any predetermined layout defect checking rule among the plurality of predetermined layout defect checking rules.

9. The method of any one of claims 1 to 8, wherein if the any layout defect has occurred in the layout file, the at least one checking result comprises at least one among the at least one layout defect and the at least one defect position; otherwise, the at least one checking result comprises a no-defect indication for indicating that no layout defect has occurred in the layout file.

10. An apparatus that operates according to the method of any one of claims 1 to 9, wherein the apparatus comprises at least the processing circuit within the main electronic device.

11. A method for performing automatic layout defect checking, in the following also referred to as ALDC, control regarding circuit design, the method being applied to a processing circuit within a client electronic device, the method comprising:
accessing a web-based entry in an ALDC control system running on a main electronic device, for any user among multiple users to upload at least a layout file of a package substrate design of at least one package substrate to the ALDC control system, in order to send at least the layout file from the client electronic device to the main electronic device through the web-based entry, wherein at least one backend program module in the ALDC control system is arranged to check the layout file according to a plurality of predetermined layout defect checking rules to generate at least one checking result, and create a layout defect checking report of the package substrate design, for being downloaded by the any user (S21), wherein the layout defect checking report carries the at least one checking result, for indicating whether any layout defect among a plurality of predetermined layout defects has occurred in the layout file; and
obtaining the layout defect checking report corresponding to the layout file from the main electronic device for making the client electronic device indicate at least one defect position of at least one layout defect of the package substrate design with a display device of the client electronic device (S22).

12. The method of claim 11, wherein a plug-in utility corresponding to the ALDC control system is installed on a layout tool running on the client electronic device; and the client electronic device is arranged to obtain the layout defect checking report corresponding to the layout file from the main electronic device to make the client electronic device show the at least one defect position on a layout view of the layout tool with aid of the plug-in utility, for the any user to read and locate the at least one defect position.

13. The method of claim 12, wherein the layout defect checking report is a text format report; and the plug-in utility running on the client electronic device is arranged to parse the layout defect checking report to make the client electronic device show the at least one defect position on the layout view of the layout tool.

14. An apparatus that operates according to the method of any one of claims 11 to 13, wherein the apparatus comprises at least the processing circuit within the client electronic device.

15. A computer-readable medium related to the method of any one of claims 1 to 9 and 11 to 13, where the computer-readable medium stores a program code which causes the processing circuit to operate according to the method when executed by the processing circuit.
